# EUROPEAN PATENT APPLICATION

(11) **EP 3 546 988 A1**
(43) Date of publication of application: **02.10.2019**
(21) Application number: 17874718.4
(22) Date of filing: 28.11.2017
(51) Int. Cl.: G02B 5/04, B41M 3/14, B42D 25/30

(54) **DISPLAY BODY, AUTHENTICITY DETERMINATION METHOD THEREFOR, AND PRINTED MATTER**

(30) Priority: 28.11.2016 JP 2016230363
(71) Applicant: Toppan Printing Co., Ltd., Tokyo 110-0016 (JP)
(72) Inventor: SHINODA, Koichi, Tokyo 110-0016 (JP)
(74) Representative: TBK
(86) International application number: PCT/JP2017/042637
(87) International publication number: WO 2018/097314

(57) **Abstract**

According to a display element (20) comprising a plurality of display areas, the display area includes a plurality of sub display areas each comprising a plurality of cells (4), and the display area is adapted to display, in response to one or more of the sub display areas changing an optical property to become reflective or transmissive in accordance with an orientation angle and an elevation angle of observation, different motifs in accordance with one or both of the orientation angle and the elevation angle of observation.

## Description

### FIELD

The present disclosure relates to a display element suitable for preventing forgery or copying of a security medium such as paper currency, cards, gift certificates etc. and public documents such as passports and a method of determining authenticity thereof, and a printed material provided with this display element.

### BACKGROUND

Conventionally, a technique called watermarking is applied for securities such as paper currency and gift certificates or public documents such as passports, in order to prevent forgery and copying. Watermarking has been known for a long time as a technique in which a pattern such as a motif can be recognized by changing the intensity of the transmitted light to provide different shades when an object is observed with light passing therethrough.

Methods for changing the intensity of the transmitted light include a technique called watermarking in which the thickness of a paper is slightly changed when producing the paper. Still today, the watermarking technique is widely applied as forgery prevention means. However, its forgery prevention effect is not sufficient since there is a risk that a watermark is imitated by patterning a paper with oil, for example, which is mistaken for the watermark at first glance. For that reason, various forgery prevention techniques for checking the effect by transmitting light to an object similarly to a watermark have been proposed.

Patent Document 1 proposes making a pattern with a liquid substance on a base material such as a colorless transparent film in a matte (rough surface) surface state. This liquid substance is a colorless transparent acrylic lacquer, for example, which penetrates into a rough surface and dries. A watermark pattern is formed by setting the light-transmitting property of the pattern part higher than the light-transmitting property of the other part.

Furthermore, in Patent Document 1, a multilayer interference film is provided by laminating transparent thin films of inorganic compounds. If the transmitted light is observed from the interference film side, an interference color which shines in iridescence can be seen. The interference color is changed by changing the observation angle. Moreover, if the transmitted light is observed from the side opposite to the interference film, a complementary color of regular reflection light on the interference film side can be seen. In this way, the watermark pattern coexists with the flip-flop effect of the interference color.

Patent Document 2 proposes a printed material where a pattern of lines is printed on either the front or back side of a printing medium, and a pattern of picture lines prepared by making a motif to be a latent image with lines is printed on the other side. By seeing this printed material with the light passing therethrough, it is possible to recognize the image of a continuous tone which appears as a result of synthesizing the patterns on the front and back sides.

Patent Document 2 shows a printed material where a line pattern is printed on either the front or back side of a light-transmitting printing medium. Printed on the other side of this printed material is a pattern having a line arrangement synchronized with the line arrangement of the line patterns on the one side, and having a similar picture line width in the vertical direction with respect to the line arrangement of the line pattern of the one side. The pitches of the line patterns on the front and back sides are changed by screen printing, and the positions of the front and back sides are aligned upon printing. In this way, a printed material, in which the patterns on the front and back sides are synthesized when seen with the light passing through the printed material and the latent image appears as an image of a continuous tone, is obtained.

Patent Document 3 proposes a printed material using a watermarked paper with an uneven shape. This uneven shape is formed by embossing with a picture line structure of a line pattern representing a motif by partially changing angles, a relief pattern, or both of the line pattern and the relief pattern. On such a watermarked paper, various lines and picture lines having certain intervals are printed to be inclined with respect to a portion constituting a portion other than the motif in an uneven shape with ink in a color other than the color of the material and in a color which is not colorless and transparent.

Patent Document 3 also describes the effect that, in the printed material of Patent Document 3, a non-constant positional relationship is generated between the uneven shape and the printed image having a certain interval, and only when viewed from a specific angle, a specific character or a motif that is a latent image can be recognized. Patent Document 3 also describes the effect that a watermarked image can be easily recognized by transmitted light in the case of a watermarked paper.

### CITATION LIST

### PATENT LITERATURE

[Patent Literature 1] Japanese Patent No. 2840724
[Patent Literature 2] Jpn. Pat. Appln. KOKOKU Publication No. H8-13568
[Patent Literature 3] Japanese Patent No. 2615401

### SUMMARY

However, such conventional techniques have the following problems.

First, with the technique disclosed in Patent Document 1, a watermark pattern is simply produced and interference multilayered films are added, so that a coloring effect due to interference of transmitted light is obtained. However, this may be easily imitated by dropping a transparent resin onto a rough surface of a general diffusion film, for example.

In addition, in the technique disclosed in Patent Document 2, screen printing is performed in alignment with the front and back sides of the base material, so that a grayscale image changed by printing when observing transmitted light is observed. However, the observed pattern is limited to a grayscale image similar to a normal watermark.

Furthermore, in the technique disclosed in Patent Document 3, offset printing is performed to the inclined surface with an uneven structure. However, this technique cannot remedy the disadvantage of Patent Document 1 that imitation is easily carried out, or the disadvantage of Patent Document 2 that only simple patterns can be realized.

The present disclosure is made in view of such situations, and its first objective is to provide a display element capable of improving motifability and forgery difficulty, and a printed material on which this display element is arranged. The second objective is to provide a method of determining authenticity in which forgery can be easily determined by using such a display element.

In order to achieve the above objectives, the present disclosure takes the measures below.

According a first aspect of the invention, a display element including a plurality of display areas, wherein
the display area includes a plurality of sub display areas each including a plurality of cells, and
the display area is adapted to display, in response to one or more of the sub display areas changing an optical property to become reflective or transmissive in accordance with an orientation angle and an elevation angle of observation, different motifs in accordance with one or both of the orientation angle and the elevation angle of observation.

According to the display element of the first aspect, it is possible to change a motif which is expressed by a contrast between reflection and transmission and includes a character, for example, in accordance with the orientation angle and the elevation angle of observation by using the optical property different for each cell.

According to a second aspect of the invention, the display element according to the first aspect, wherein
a sub display area or two or more sub display areas of the plurality of sub display areas belong to a first sub display area group,
another sub display area or other two or more sub display areas of the plurality of sub display areas belong to a second sub display area group, and
the optical property of the cells in the sub display area belonging to the second sub display area group changes from transmissive to reflective if the optical property of the cells in the sub display area belonging to the first sub display area group changes from reflective to transmissive in accordance with change in one or both of the orientation angle and the elevation angle of observation.

According to the display element of the second aspect, it is possible to provide sub display area groups respectively having motifs in one display area, the motifs including a character, for example, and being changed in accordance with the orientation angle and the elevation angle of observation in different ways from each other.

According to a third aspect of the invention, the display element according to the first or second aspect, wherein the motif is displayed in a manner that
a transmissive sub display area of the plurality of sub display areas is surrounded by a reflective sub display area, or
the reflective sub display area of the plurality of sub display areas is surrounded by the transmissive sub display area.

According to a fourth aspect of the invention, the display element according to the second aspect, wherein
yet another sub display area or yet other two or more sub display areas of the plurality of sub display areas belong to a third sub display area group, and
the optical property of the cells in the sub display area belonging to the third sub display area group does not change if the optical property of the cells in the sub display area belonging to the first sub display area group and the optical property of the cells in the sub display area belonging to the second sub display area group change.

According to the display element of the fourth aspect, it is possible to provide, in one display area, a motif (including a character, for example) which is changed if the orientation angle and the elevation angle of observation are changed, and also a motif (including a character, for example) which is not changed even if the orientation angle and the elevation angle of observation are changed.

According to a fifth aspect of the invention, the display body according to any one of the first to fourth aspects, wherein the optical property of each of the cells is changed in accordance with the orientation angle and the elevation angle of observation, by a structure in which
the cell includes a plurality of prism structures arranged in parallel to each other and extending linearly or in an arc, the prism structures each having a cross-section of a triangular shape,
the triangular shape of each of the prism structures includes sides sandwiching an apex and forming respective inclination angles different from each other, the side having a smaller inclination angle constituting a first inclined surface, wherein the first inclined surfaces of the prism structures have an identical inclination angle for each of the cells, and
the cells include more than one cells in which the prism structures in different cells are different in one or both of the inclination angle of the first inclined surfaces and a range of an orientation angle of the first inclined surfaces.

According to a sixth aspect of the invention, the display body according to any one of the first to fourth aspects, wherein the optical property of each of the cells is changed in accordance with the orientation angle and the elevation angle of observation, by a structure in which
the cell includes a plurality of prism structures arranged in parallel to each other and extending linearly or in an arc, the prism structures each having a cross-section of a triangular shape,
the triangular shape of each of the prism structures includes sides sandwiching an apex and forming respective inclination angles different from each other, the side having a smaller inclination angle constituting a first inclined surface, wherein the inclination angle of the first inclined surfaces of the prism structures in the cell continuously changes, and
the cells include more than one cells in which the prism structures in different cells are different in one or both of a range of the inclination angle of the first inclined surfaces and a range of an orientation angle of the first inclined surfaces.

According to the display element of the aspect 6, the angle of the prism of asymmetric prism structures is changed continuously in a similar manner to a Fresnel lens and a linear Fresnel lens.

According to a seventh aspect of the invention, the display element according to the first to sixth aspects, wherein the plurality of display areas are arranged on an opaque base material.

According to the display element of the seventh aspect, it is possible to provide, on an opaque sheet such as a printed paper and a printed plastic card, a display area displaying a motif (including a character, for example) which is expressed by a contrast between reflection and transmission and is changed if the orientation angle and the elevation angle of observation are changed.

According to an eighth aspect of the invention, the display element according to any one of the first to sixth aspects, wherein the plurality of display areas are arranged on a transparent base material.

According to a ninth aspect of the invention, the display element according to any one of the first to sixth aspects, wherein the display element is provided on a screen of a flat panel display or inside the flat panel display.

According to a tenth aspect of the invention, a printed material is formed by arranging the display element according to any one of the first to ninth aspects.

According to an eleventh aspect of the invention, a method for determining authenticity of the display element according to any one of the first to sixth aspects by checking change in a displayed motif while changing the orientation angle and the elevation angle of observation of the display element.

According to the present disclosure, it is possible to provide a display element capable of improving motifability and a forgery difficulty, and a printed material on which the display element is disposed. By using such a display element, it is possible to provide a method of determining authenticity by which forgery can be easily determined.

### BRIEF DESCRIPTION OF THE DRAWINGS

FIG. 1 is a plan view showing a configuration example of a display element according to the present embodiment.
FIG. 2 is a perspective view of a display element corresponding to FIG. 1.
FIG. 3 is a cross-sectional view of the display element taken along the line X1-X1' of FIG. 2.
FIG. 4A is a plan view showing an example of a rib structure provided on a boundary of cells.
FIG. 4B is a plan view showing another example of a rib structure provided on a boundary of cells.
FIG. 5 illustrates conceptually a visual effect by a shift of the viewpoint.
FIG. 6 illustrates conceptually another visual effect by a shift of the viewpoint.
FIG. 7 is a photographic image obtained by photographing the actual appearance corresponding to FIG. 6.
FIG. 8 illustrates conceptually conditions for observing scattering light in the display element according to the present embodiment.
FIG. 9 illustrates a conceptually conditions for observing transmitted light in the display element according to the present embodiment.
FIG. 10 illustrates conceptually another observation condition of transmitted light on the display element according to the present embodiment.
FIG. 11 is a plan view showing an example of a display element on which an arc-shaped prism structure is arranged.
FIG. 12 is a cross-sectional view of the display element taken along line X2-X2' of FIG. 11.
FIG. 13A is an example of a motif observed in a display area when the display element of the configuration of FIG. 11 and FIG. 12 is observed from the left side.
FIG. 13B is an example of a motif observed in a display area when the display element of the configuration of FIG. 11 and FIG. 12 is observed from the front side.
FIG. 13C is an example of a motif observed in a display area when the display element of the configuration of FIG. 11 and FIG. 12 is observed from the right side.
FIG. 14 is a cross-sectional view of another configuration of the display element taken along the line X2-X2' of FIG. 11 (the case where the orientation is opposite to that of FIG. 12).
FIG. 15A is an example of a picture observed in the display area when the display element of the configuration of FIG. 11 and FIG. 14 is observed from the left side.
FIG. 15B is an example of a motif observed in the display area when the display element of the configuration of FIG. 11 and FIG. 14 is observed from the front side.
FIG. 15C is an example of a motif observed in the display area when the display element of the configuration of FIG. 11 and FIG. 14 is observed from the right side.
FIG. 16 is a plan view showing another example of a display element on which an arc-shaped prism structure is arranged.
FIG. 17 is a cross-sectional view of the display element taken along line X3-X3' of FIG. 16.
FIG. 18A is an example of a motif observed in the display area when the display element of the configuration of FIG. 16 and FIG. 17 is observed from the left side.
FIG. 18B is an example of a motif observed in the display area when the display element of the configuration of FIG. 16 and FIG. 17 is observed from the front side.
FIG. 18C is an example of a motif observed in the display area when the display element of the configuration of FIG. 16 and FIG. 17 is observed from the right side.
FIG. 19 is a cross-sectional view of another configuration of the display element taken along line X3-X3' of FIG. 16.
FIG. 20A is an example of a motif observed in the display area when the display element of the configuration of FIG. 16 and FIG. 19 is observed from the left side.
FIG. 20B is an example of a motif observed in the display area when the display element of the configuration of FIG. 16 and FIG. 19 is observed from the front side.
FIG. 20C is an example of a motif observed in the display area when the display element of the configuration of FIG. 16 and FIG. 19 is observed from the right side.
FIG. 21 is a plan view showing an example of a display element on which a linear prism structure is arranged.
FIG. 22 is a cross-sectional view of the display element taken along line X4-X4' in FIG. 21.
FIG. 23 is a plan view showing a configuration example of the display element according to the present embodiment (the case of a linear prism structure).
FIG. 24 is a cross-sectional view of the display element taken along line X5-X5' in FIG. 23.
FIG. 25 is a plan view showing another configuration example of the display element according to the present embodiment (the case of an arc-shaped prism structure).
FIG. 26 illustrates the concept of the sub display area.
FIG. 27 is a plan view showing an example of a display element on which a prism structure different from the present invention is arranged for comparison.
FIG. 28 is a cross-sectional view taken along the line X6-X6' in FIG. 27.
FIG. 29A is an example of a motif observed in the display area when a comparative example of the configuration of FIG. 27 and FIG. 28 is observed from the left side.
FIG. 29B is an example of a motif observed in the display area when the comparative example of the configuration of FIG. 27 and FIG. 28 is observed from the front side.
FIG. 29C is an example of a motif observed in the display area when a comparative example of the configuration of FIG. 27 and FIG. 28 is observed from the right side.
FIG. 30 is a cross-sectional view showing a cross-sectional configuration example of the display element taken along the line X7-X7' in FIG. 25.
FIG. 31 is an image showing an example of a plane where the motif of the printing is aligned with the cluster 40 of the cells 4.

### DETAILED DESCRIPTION

Embodiments of the present disclosure will be described with reference to the drawings. The various embodiments described below are preferable examples of the present disclosure. In addition, parts or members having the same or corresponding function are described by using the same reference symbols, and explanation thereof is omitted.

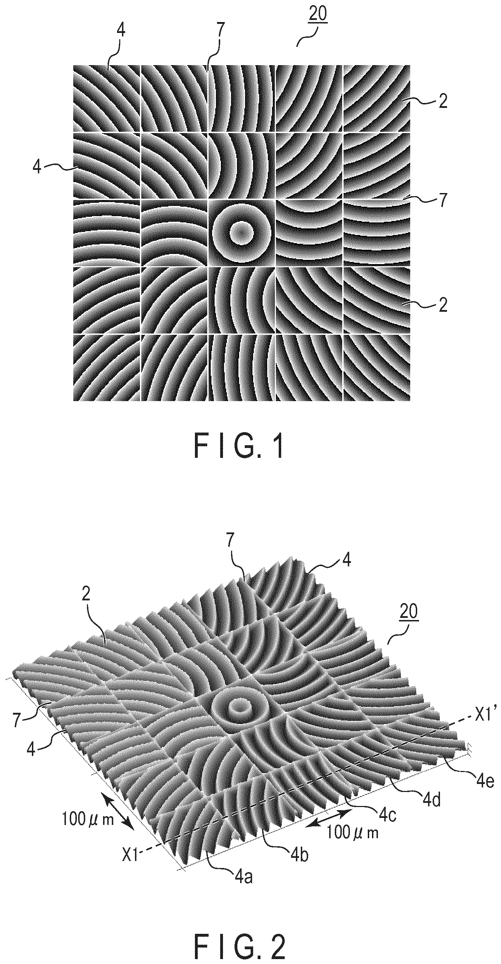

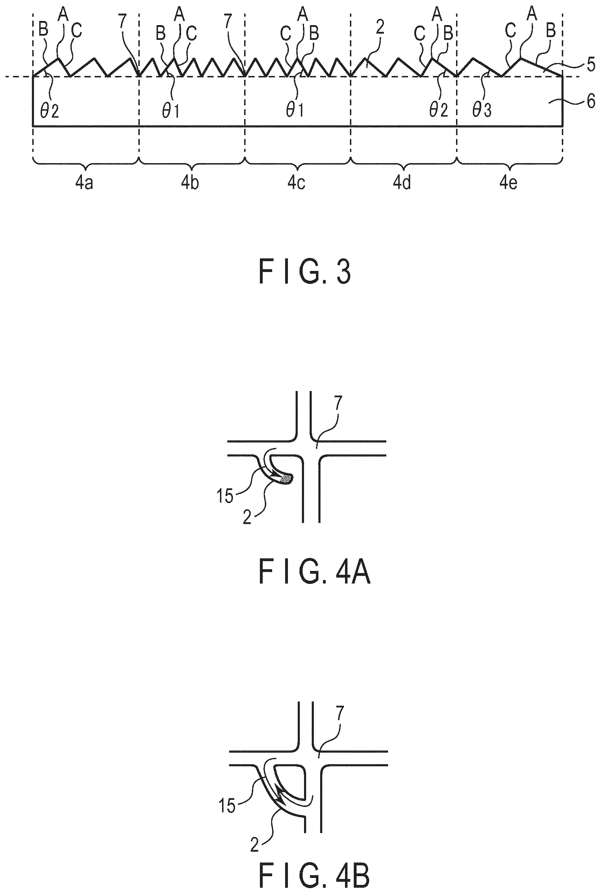

FIG. 1 is a plan view showing a configuration example of a display element 20 according to one embodiment. FIG. 2 is a perspective view of the display element 20 corresponding to FIG. 1. FIG. 3 is a cross-sectional view of the display element 20 taken along the line X1-X1' of FIG. 2.

As shown in FIGS. 1, 2, and 3, the display element 20 has a lens layer 5 on which a plurality of arc-shaped prism structures 2 are arranged parallel to each other on a base layer 6 for each cell 4. In other words, the arc-shaped prism structures 2 are arranged parallel to each other, and the lens layer 5 has a pleated structure.

The material of the lens layer 5 may be resin that transmits a visible light wavelength. As the resin that transmits a visible light wavelength, acrylic, polycarbonate, epoxy, polyethylene, polypropylene, etc. may be applied. If thermoplastic resin or photo-curable resin is applied, by transfer using an original plate on which asymmetric prism structures are formed, the lens layer 5 having the structure on one surface or both surfaces can be easily manufactured.

For protecting the lens layer 5 and improving its strength, a film or a sheet, etc. made of a resin having a high light-transmitting property, and a transparent support (not shown) made of a transparent inorganic material may be provided in addition to the lens layer 5. As the resin that transmits a visible light wavelength of the support, thermoplastic resin can be applied. As a support using the thermoplastic resin, a stretched or non-stretched support can be applied. As the thermoplastic resin of the support, polyethylene terephthalate, polyethylene naphthalate, polypropylene, polyethylene, acrylic, etc. can be applied.

This kind of support is generally provided on the side opposite to the structural surface of the lens layer 5, but such a support can also be provided on the structural surface side (the upper side in FIG. 3). In this case, the optical effect is lost if the structure is filled with resin such as an adhesive. Thus, it is preferable that the structural surface is partially adhered to the transparent substrate by halftone dots or patterning so as to include the air layer therebetween. Also, by providing a support to enclose the structural surface, it is possible to prevent imitation and forgery in which the shape of the structural surface is copied.

Furthermore, it is also possible to provide transparent substrates to interpose the lens layer 5 therebetween from both sides, and such a configuration is preferable if the required resistance is particularly high. Depending on the required resistance, it is also possible to provide a protective layer (not shown) by coating.

As exemplified in FIG. 3, the cross section of a prism structures 2 has a triangular shape. In such a prism structure 2, the inclination angles of both sides sandwiching the apex A of the triangle are different. Further, the inclination angle θ of the inclined surface B with a small inclination angle is the same in every prism structure 2 in the same cell 4. The inclination angle θ may be different for each cell 4. In the example shown in FIG. 3, the inclination angle is θ2 in a cell 4a, θ1 in a cell 4b, θ1 in a cell 4c, θ2 in the cell 4d, and θ3 in a cell 4e. Here, their relationship is expressed as inclination angle θ1 > inclination angle θ2 > inclination angle θ3. With a boundary portion 7 between the cell 4b and the cell 4c as a boundary, the orientation of the inclined surface B is reversed, that is, the orientation of the prism structures 2 is reversed.

An inclined surface C with a steep inclination angle is a rise surface, and the angle can be set within a range where the optical effect is not affected in a Fresnel lens, for example. The angle of the rise surface is usually called a rise angle, and the rise angle when the rise surface is perpendicular to the surface constituting the display element 20 is 0°. In the display element 20 according to the present embodiment, the rise angle can be set within the range of 0° to 20°.

In this manner, the prism structure 2 has an asymmetrical shape in the cross section formed of two different inclined surfaces B and C, and the inclined surface B with a more moderate inclination angle among them is a surface that acts optically, mainly.

As a shape of such a prism structure 2, it is possible to use a grid shape similar to a general Fresnel lens or a blazed grating. As the size of a prism structure 2, the structural pitch can be set to 1µm to 50µm and can further be set to 5µm to 30µm. This is because the effect of diffraction by the periodic structure begins to appear when the structure pitch becomes smaller than 5µm, and the effect of diffraction becomes dominant when the structural pitch becomes smaller than 1µm. On the other hand, the roughness of the periodic structure begins to be visible to the naked eye when the structural pitch exceeds 30µm, and becomes clearly visible when the structural pitch exceeds 50µm.

The prism structures 2 are partitioned and arranged for each cell 4. Therefore, the prism structures 2 are discontinuous at the boundary portion 7 between the cells 4. A side of a cell 4 is preferably within a range of 20µm to 100µm, and can be within a range of 40µm to 60µm. The display element 20 shown in FIG. 2 is an example in the case where a side of a cell 4 is 100µm.

The boundary portion 7 between the cells 4 causes optical noise, which leads to generation of scattered light. Therefore, when a side of a cell 4 is made less than 40µm, the collapse of the structure of the boundary portion 7 begins to affect the prism structures 2 arranged in the cell 4. The effect of noise increases if a side is made less than 20µm. The structure of a cell 4 begins to be visible to the naked eye when a side exceeds 60µm, and the structure of the cell 4 becomes conspicuous when a side exceeds 100µm.

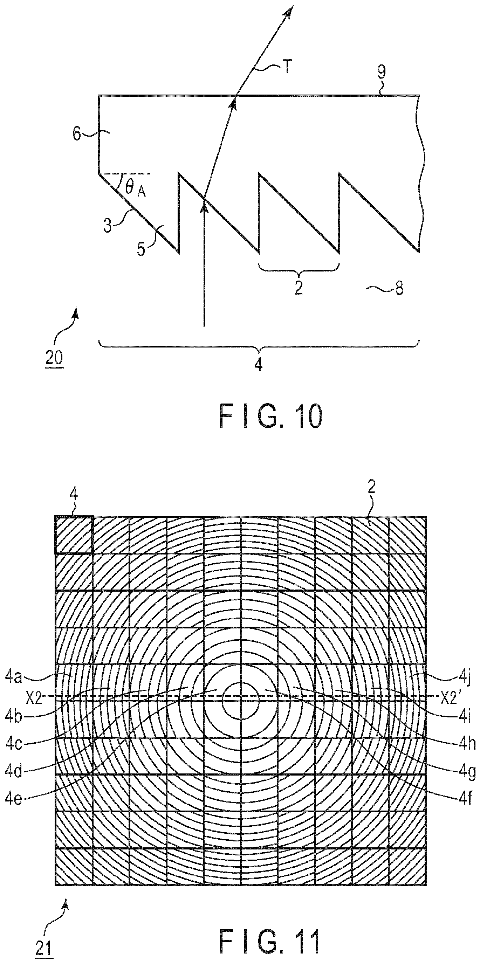

It is also possible to form a plurality of cells 4 into a cluster, and use the cluster of cells 4 as a piece of a motif. A geometric picture can be formed by combining such pieces. The geometric motif can be made of repeated patterns. For example, concentric prism structures 2 in the cluster of cells 4 in FIG. 11 are used as a piece of a motif, and a geometrical motif can be formed by arranging a plurality of such pieces.

FIGS. 4A and 4B are plan views showing two examples of a rib structure 15 provided on the boundary portion 7 between the cells 4.

In consideration of manufacturability of the prism structures 2, the rib structure 15 may be provided on the boundary portion 7, as shown in FIGS. 4A and 4B. At this time, the rib structure 15 forms a loop and does not generate an end portion, since the boundary portion 7 surrounds the periphery of the cell 4. This is because it is possible to improve the fluidity of the resin for molding so as to improve the moldability by forming the boundary portion 7 into a groove structure and flowing a resin for molding the lens layer 5 in the groove structure in a molding plate. In this case, the lens layer 5 may be configured in a manner that one end of a prism structure 2 is not connected to the rib structure 15 as shown in FIG. 4A, or that both ends of the prism structure 2 are connected to the rib structure 15 as shown in FIG. 4B. In particular, the configuration in which a loop is formed of the prism structure 2 and the rib structure 15 by connecting both ends of the prism structure 2 to the rib structure 15 as shown in FIG. 4B prevents the inhibition of the flow of the resin at the end of the lens layer 5. Similarly, inhibition of the flow of the resin may also be prevented by the prism structure 2 forming a loop. The width of the rib structure 15 may be set in such a manner that the area of the rib structure 15 is 10% or less and 2% or more of the area of the cell 4. In addition, if the display quality is prioritized over the easiness of manufacturing, the width of the rib structure 15 can be set in such a manner that the area of the rib structure 15 is 5% or less and 2% or more of the area of the cell 4.

As shown in FIG. 3, in the display element 20, the inclination angle θ of the inclined surface B varies from the X1 side toward the X1' side (from the left side to the right side in the drawing) for different cells 4 gradually . By gradually varying the inclination angle θ, the angular range of reflection and transmission changes for each cell 4, and the optical property change for each cell 4. Therefore, it is possible to realize a visual effect in which a motif moves in a pseudo manner by shifting the viewpoint, that is, by altering the orientation angle and elevation angle of the observation. Such a visual effect will be described below.

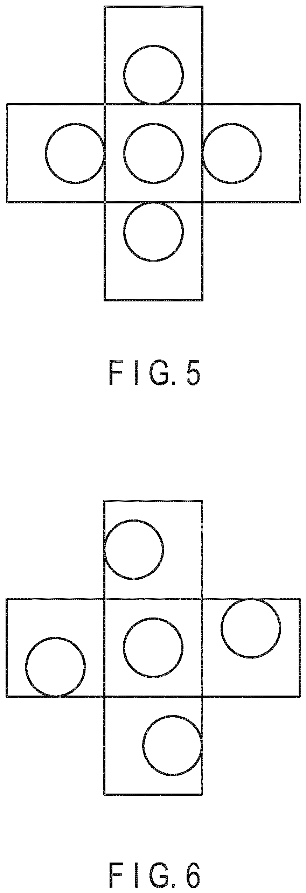

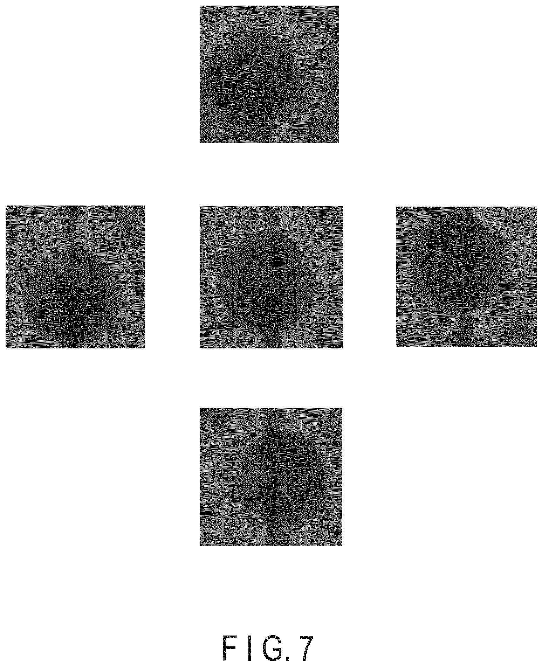

FIG. 5 and FIG. 6 illustrate conceptually such a visual effect by a shift of the viewpoint. In FIGS. 5 and FIG. 6, the circle at the center indicates the appearance when observed from the front side, and the circles at the top, bottom, left, and right indicate the appearance when the viewpoint is shifted in each direction. FIG. 7 is a photographic image of a real object corresponding to FIG. 6.

In the example of FIG. 5, the circle, which is seen at the center when observed from the front side, moves downward when the view point is directed upward, moves upward when the view point is directed downward, moves leftward when the view point is directed rightward, and moves rightward when the view point is directed leftward.

In the examples of FIG. 6 and FIG. 7, the circle, which is seen at the center when observed from the front side, moves leftward when the view point is directed upward, moves rightward when the view point is directed downward, moves upward when the view point is directed rightward, and moves downward when the view point is directed leftward.

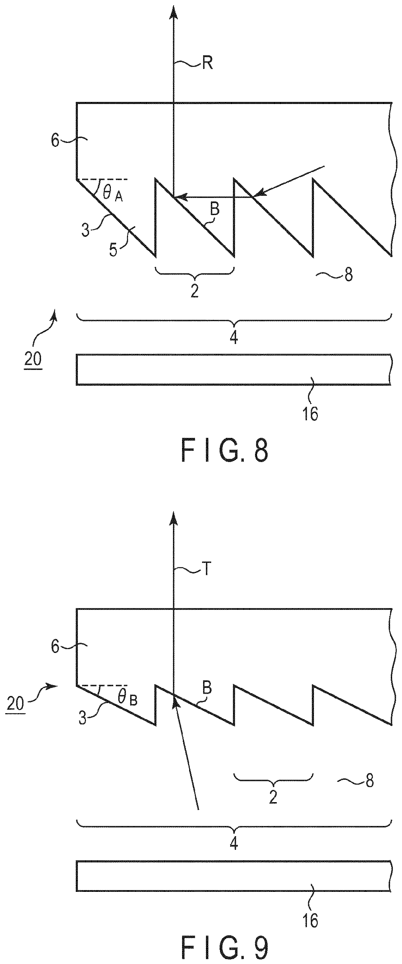

Next, the relationship of the inclination angle θ of the inclined surface B with the reflection and transmission will be described. FIG. 8 is a view illustrating the observing conditions of the reflected light on the display element 20, and FIG. 9 is a view illustrating the observing conditions of transmitted light on the display element 20.

FIGS. 8 and 9 are partially enlarged views in which a structural layer 6 shown in FIG. 3 is turned upside down in order to illustrate how light travels. In FIG. 8 and FIG. 9, the rise surface is set vertical as an example. The inclination angle of the inclined surface B is different in FIG. 8 and FIG. 9. The inclination angle is θA in the case of FIG. 8, the inclination angle is θB in the case of FIG. 9, and their relationship is expressed as θA > θB. This angular difference, that is, this difference angle (θA - θB) makes a difference between reflection and transmission. In the display element 20, the material of the prism structure 2 is a resin having a refractive index of 1.5, and a structural surface 3 is in contact with an air layer 8.

In FIG. 8, since the inclination angle θA of the inclined surface B is steep, the light incident on the structural layer 6 from the observer's side is largely refracted at the inclined surface B and does not reach the observer on the upper side of the drawing. Therefore, the observer observes reflected light R which has traveled through the structural layer 6 by being repeatedly refracted and reflected, as shown in FIG. 8.

On the other hand, in FIG. 9, since the inclination angle θB of the inclined surface B is moderate, the light incident on the structural layer 6 from the air layer 8 reaches the observer as transmitted light T although the traveling direction slightly changes due to refraction. In addition, since the inclination angle θB of the inclined surface B is moderate, the degree of change in the traveling direction is low, which allows the light that has traveled through the structural layer 6 to reach the observer.

The difference between reflection and transmission, which is caused when the display element 20 is seen from the front side, is made by such a mechanism. However, a phenomenon of transmission also occurs in the structure of FIG. 8 if the observation angle is changed. The display element 20 makes it possible to express the aforementioned movement of the motif and the three-dimensional effect by the change of reflection and transmission caused by the change of the viewpoint.

FIG. 10 shows the optical path in the case of observing the structure of FIG. 8 from another angle. In FIG. 10, the light incident on the structural layer 6 from the air layer 8 reaches the observer as transmitted light T after being largely refracted twice at the structural surface 3 and the exit surface 9.

A display element having another configuration according to the present embodiment will be described with reference to the drawings.

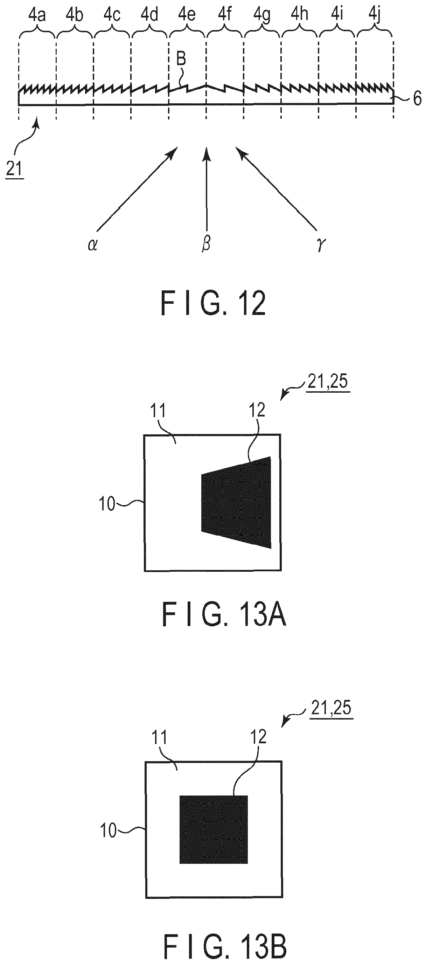

FIG. 11 is a plan view showing a display element 21 formed by arranging arc-shaped prism structures. FIG. 12 is a cross-sectional view taken along the line X2-X2' in FIG. 11, and shows a configuration where the inclination angle θ of the inclined surface B is the same in the same cell 4 and is smaller in a cell 4 closer to the center of the display element 21 (namely, in the order of a cell 4a → a cell 4b → a cell 4c → a cell 4d → a cell 4e, and a cell 4j → a cell 4i → a cell 4h → a cell 4g → a cell 4f). Although the pitch of the prism structures 2 is the same in the same cell 4, the pitch of the prism structures 2 is larger in a cell 4 closer to the center of the display element 21. As shown in FIG. 12, the orientation of the inclined surface B is reversed; in other words, the orientation of the prism structures 2 is reversed, with the center of the display element 21 (namely, the boundary between the cell 4e and the cell 4f) as a boundary.

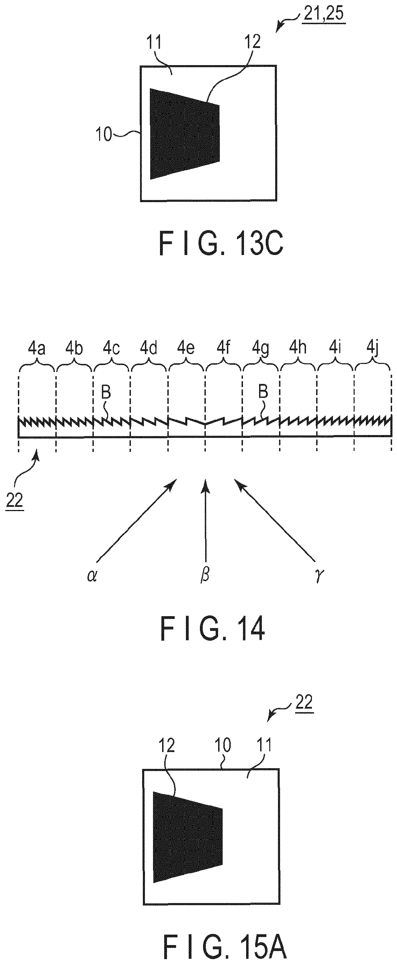

When such a display element 21 is observed from the front side, namely, from the orientation β as shown in FIG. 12, the motif shown in FIG. 13B is displayed in a display area 10. A black region 12 appears by transmission and a white region 11 appears by reflection. In this case, when the observing orientation is shifted from the front side to the left side and the motif is observed from the orientation α, the motif observed in the display area 10 as shown in FIG. 13B changes as shown in FIG. 13A. Conversely, when the observing orientation is shifted from the front side to the right side and the motif is observed from the orientation γ, the motif observed in the display area 10 as shown in FIG. 13B changes to the one shown in FIG. 13C.

FIG. 14 is a cross-sectional view of another configuration taken along line X2-X2' in FIG. 11. Also in FIG. 14, similarly to FIG. 12, the inclination angle θ of the inclined surface B and the pitch of the prism structure 2 are the same in the same cell 4, and the inclination angle θ is smaller and the pitch of the prism structures 2 is larger in a cell 4 closer to the center of the display element 22 (namely, in the order of the cell 4a → the cell 4b → the cell 4c → the cell 4d → the cell 4e, and the cell 4j → the cell 4i → the cell 4h → the cell 4g → the cell 4f). However, the orientation of the inclined surface B, namely, the orientation of the prism structures 2 is opposite to that of FIG. 12.

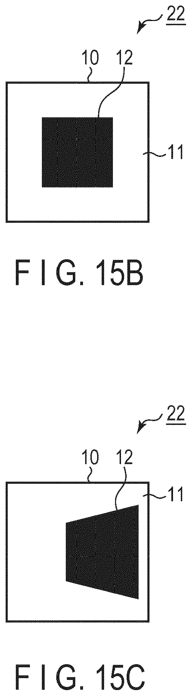

When such a display element 22 is observed from the front side, namely, from the orientation β as shown in FIG. 14, the motif shown in FIG. 15B is displayed in the display area 10. A black region 12 appears by transmission and a white region 11 appears by reflection. When the observing orientation is shifted from the front side to the left side and the motif is observed from the orientation α, the motif of FIG. 15B changes to the motif of FIG. 15A. When the observing orientation is shifted from the front side to the right side and the motif is observed from the orientation γ, the motif of FIG. 15B changes to the motif of FIG. 15C. Since the orientation of the inclined surface B of the prism structures 2 shown in FIG. 14 is opposite to the orientation of the inclined surface B of the prism structures 2 shown in FIG. 12, the change to FIG. 15A is in the opposite direction from the change to FIG. 13A, and the change to FIG. 15C is in the opposite direction from the change to FIG. 13C.

A display element having yet another configuration according to the present embodiment will be described with reference to the drawings.

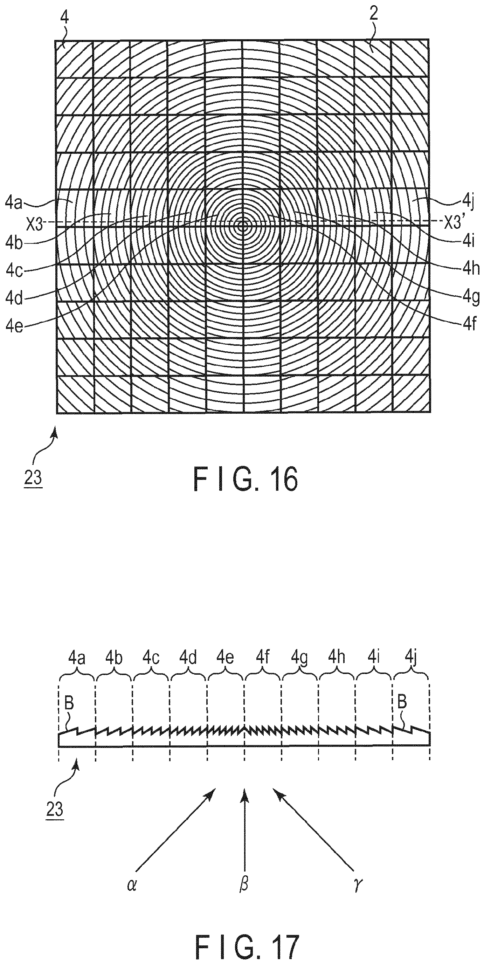

FIG. 16 is a plan view showing a display element 23 also formed by arranging arc-shaped prism structures 2. FIG. 17 is a cross-sectional view taken along the line X3-X3' in FIG. 16, and shows a state where the inclination angle θ of the inclined surface B is the same in the same cell 4 and is larger in a cell 4 closer to the center of the display element 23 (namely, in the order of the cell 4a → the cell 4b → the cell 4c → the cell 4d → the cell 4e, and the cell 4j → the cell 4i → the cell 4h → the cell 4g → the cell 4f). Although the pitch of the prism structures 2 is the same in the same cell 4, the pitch of the prism structures 2 is smaller in a cell 4 closer to the center of the display element 23. The orientation of the prism structures 2 is reversed with the center of the display element 23 (namely, the boundary between the cell 4e and the cell 4f) as a boundary. That is, in the configurations shown in FIGS. 16 and 17, the orientation of the inclined surface B of the prism structures 2, the change in the pitch, and the change in the inclination angle θ are opposite to those in the configurations shown in FIGS. 11 and 14.

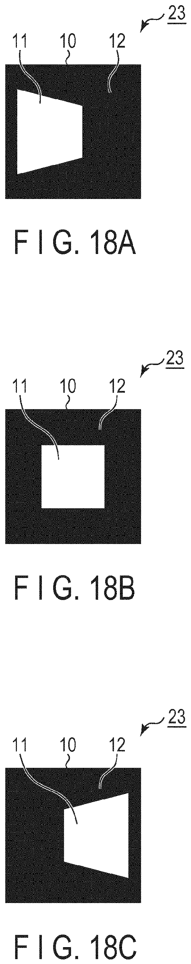

When such a display element 23 is observed from the front side, namely, from the orientation β as shown in FIG. 17, the motif of FIG. 18B is displayed in the display area 10. When the observing orientation is shifted from the front side to the left side and the motif is observed from the orientation α, the motif of FIG. 18B changes to the motif of FIG. 18A. When the observing orientation is shifted from the front side to the right side and the motif is observed from the orientation γ, the motif of FIG. 18B changes to the motif of FIG. 18C.

In other words, white and black in the motif shown in FIG. 15A are inverted in the motif shown in FIG. 18A, and white and black in the motif shown in FIG. 15C are inverted in the motif shown in FIG. 18C; however, the motif changes by changing the observing orientation.

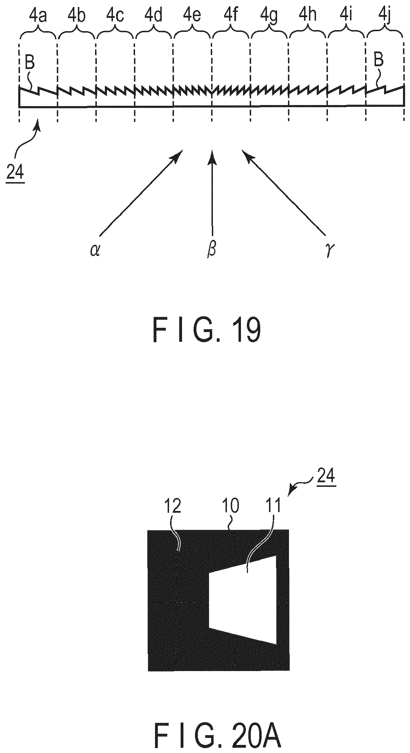

Also in FIG. 19, similarly to FIG. 17, the inclination angle θ of the inclined surface B is the same in the same cell 4, and is larger in a cell 4 closer to the center of the display element 24 (namely, in the order of the cell 4a → the cell 4b → the cell 4c → cell 4d → the cell 4e, the cell 4j → the cell 4i → the cell 4h → the cell 4g → the cell 4f). The pitch of the prism structures 2 is the same in the same cell 4, but is smaller in a cell 4 closer to the center of the display element 24. However, the orientation of the inclined surface is opposite to that of FIG. 17. In other words, in the configurations shown in FIGS. 16 and 19, the orientation of the inclined surface B of the prism structures 2 is opposite to that of the configurations shown in FIGS. 16 and 17; however, the change in the pitch and the change in the inclination angle θ are the same as those of the configurations shown in FIGS. 16 and 17.

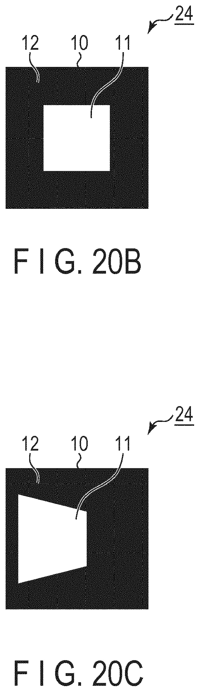

When such a display element 24 is observed from the front side, namely, from the orientation β as shown in FIG. 19, the motif of FIG. 20B is shown in the display area 10. When the observing orientation is shifted from the front side to the left side and the motif is observed from the orientation α, the motif of FIG. 20B changes to the motif of FIG. 20A. When the observing orientation is shifted from the front side to the right side and the motif is observed from the orientation γ, the motif of FIG. 20B changes to the motif of FIG. 20C.

In other words, white and black in the motif shown in FIG. 13A are inverted in the motif shown in FIG. 20A, and white and black in the motif shown in FIG. 13C are inverted in the motif shown in FIG. 20C; however, the motif changes by changing the observing orientation.

A display element having yet another structure according to the present embodiment will be described with reference to the drawings.

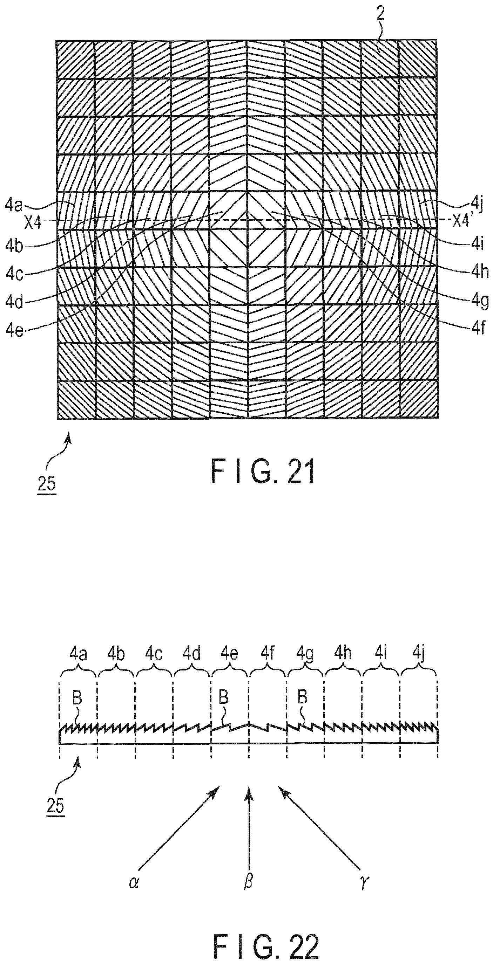

FIG. 21 is a plan view showing a display element 25 formed by arranging linear prism structures 2. FIG. 22 is a cross-sectional view taken along the line X4-X4' in FIG. 21, in which the inclination angle θ of the inclined surface B is the same in the same cell 4, but is smaller in a cell 4 closer to the center of the display element 25 (namely, in the order of the cell 4a → the cell 4b → the cell 4c → the cell 4d → the cell 4e, and the cell 4j → the cell 4i → the cell 4h → the cell 4g → the cell 4f). The pitch of the prism structures 2 is the same in the same cell 4, but is larger in a cell 4 closer to the center of the display element 25. The orientation of the inclined surface B, that is, the orientation of the prism structure 2 is reversed with the center of the display element 25 (namely, the boundary between the cell 4e and the cell 4f) as a boundary. In other words, the configuration shown in FIGS. 21 and 22 is different from the configuration shown in FIGS. 11 and 12 only in that the prism structures 2 are linear.

When such a display element 25 is observed from the front side, namely, from the orientation β as shown in FIG. 22, the motif shown in FIG. 13B is observed in the display area 10 similarly to the display element 21 shown in FIG. 11. In this case, in FIG. 22, when the observing orientation is shifted from the front side to the left side and the motif is observed from the orientation α, the motif of FIG. 13B changes to the motif of FIG. 13A. In FIG. 22, when the observing orientation is shifted from the front side to the right side and the motif is observed from the orientation γ, the motif of FIG. 13B changes to the motif of FIG. 13C.

A display element having yet another configuration according to the present embodiment will be described with reference to the drawings.

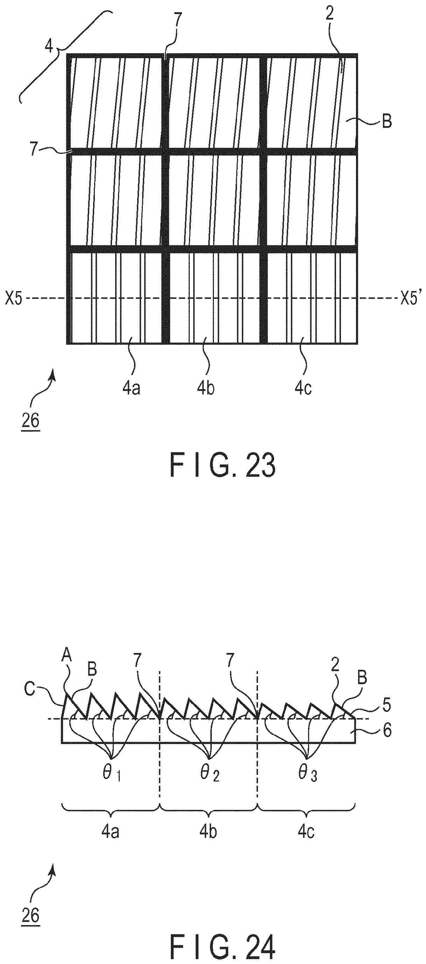

As exemplified in the plan view of FIG. 23, a display element 26 has a lens layer 5 where a plurality of prism structures 2 are linearly arranged parallel to each other in each cell 4. In other words, the linear prism structures 2 are arranged parallel to each other, and the lens layer 5 has a pleated structure.

FIG. 24 shows a cross-sectional configuration taken along line X5-X5' in FIG. 23.

Also in the display element 26 having such a configuration, as described above, if the orientation angle is set to the direction of projection on the plane constituting the display element 26, the normal line of the inclined surface B of the prism structures 2 is turned so that the orientation angle is more inclined clockwise in a cell 4 closer to the upper side in FIG. 23, in order to change an optical property for each cell 4.

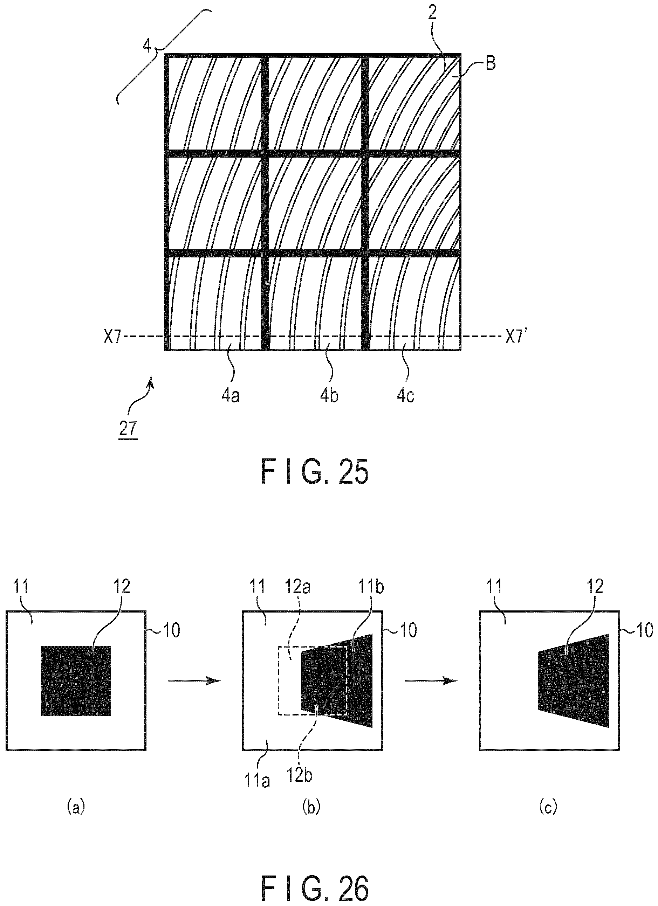

As described above, in order to turn the orientation angle in the clockwise direction, the display element 27 having the arc-shaped prism structures 2 of FIG. 25 may be obtained in place of the display element 26 having the linear prism structures 2 of FIG. 23. In this case, the orientation angle in each cell 4 of the display element 27 may be set to the average value of the orientation angles in the cell 4. This is because it is impossible to identify the difference between the straight lines of FIG. 23 and the arcs in FIG. 25 with the naked eye, considering that a side of the cell 4 is equal to or less than 100µm.

As described above, the display bodies 20 to 27 according to the present embodiment have, on their surfaces, a display area 10 displayed as shown in FIGS. 13A to 13C, FIGS. 15A to 15C, FIGS. 18A to 18C, and FIGS. 20A to 20C. The display area 10 is formed of a plurality of sub display areas each having a plurality of cells 4. Some of the plurality of sub display areas are displayed in white if the optical property is reflective (an area 11) and are displayed in black when the optical property is transmissive (an area 12) in accordance with the orientation angle and the elevation angle of the observation, thereby displaying different motifs in accordance with either the orientation angle or the elevation angle of the observation, or both the orientation angle and the elevation angle of the observation.

As described above, in accordance with the orientation angle and the elevation angle of the observation, it is assumed that a sub display area where the optical property is reflective or transmissive belongs to a first sub display area group or a second sub display area group. The change in the optical property in a sub display area belonging to the first sub display area group is the opposite from that in a sub display area belonging to the second sub display area group. Among the plurality of sub display areas, a sub display area, in which the optical property does not change even if the orientation angle and the elevation angle of the observation change, is assumed to belong to a third sub display area group.

With reference to FIG. 26, the concept of such a sub display area will be described.

FIG. 26 shows a state where the motif shown in FIG. 13B changes to the motif shown in FIG. 13A. That is, the motif of FIG. 26 (a) observed by seeing from the orientation angle β changes to the motif of FIG. 26 (c) when seen from the orientation angle α. As shown in FIG. 26 (b), such a change is obtained because the optical property of a region 12a as a part of a region 12 which has been transmissive is inverted from transmissive to reflective, whereas the optical property of the region 11b as a part of a region 11 which has been reflective is inverted from reflective to transmissive, the optical property of a region 12b as another part of the transmissive region 12 does not change and remains transmissive, and the optical property of the region 11a as another part of the reflective region 11 does not change and remains reflective. In such a case, the sub display area as the area 12a belongs to the first sub display area group, the sub display area as the area 11b belongs to the second sub display area group, and the sub display areas as the area 11a and the area 12b belong to the third sub display area group.

Then, when the observed orientation angle changes from the orientation angle β to the orientation angle α, the optical property of the cells in the sub display area (the area 12a) belonging to the first sub display area group changes from transmissive to reflective, the optical property of the cells in the sub display area (the area 11b) belonging to the second sub display area group changes from reflective to transmissive, and the optical property of the cells in the sub display areas (the areas 11a and 12b) belonging to the third sub display area group does not change.

As described above, if the motifs of FIGS. 13A to 13C and FIGS. 15A to 15C are displayed, the transmissive sub display area (the area 12) is surrounded by the reflective sub display area (the area 11). On the other hand, when the motifs of FIGS. 18A to 18C and FIGS. 20A to 20C are displayed, the reflective sub display area (the area 11) is surrounded by the transmissive sub display area (the area 12) .

If the display element 20 is applied as a reflective type as shown in FIG. 8, the lens layer 5 may be provided on a base material 16 that is partially or entirely opaque. As the base material 16 that is partially or entirely opaque, a printed paper or a printed plastic card may be applied. At this time, in order to obtain a sufficient visual effect, the opaque substrate 16 may have low brightness. While the reflective area of the display element 20 looks white because of the reflected light, the transmissive area is in a contrasting color to while of the reflective area, namely, a dark and deep color since the transmissive area displays the color of the base material, whereby the contrast can be increased.

Printing on papers or plastic cards can be performed by using ink. As this ink, offset ink, letterpress ink, gravure ink, etc. can be applied in accordance with the printing method, and resin ink, oil-based ink, and water-based ink can be applied in accordance with different compositions. In accordance with different drying methods, oxidation polymerization ink, penetration drying ink, evaporation drying ink, and ultraviolet curing ink can be applied. Pigments and dyes can also be applied as the ink. As the pigment, inorganic pigments or organic pigments can be applied. As dyes, organic dyes are used mainly. Invisible ink can also be applied. As the invisible ink, fluorescent ink or infrared absorbing ink can be applied. Functional ink of which color changes in accordance with the illumination angle or the observation angle may be applied. As such functional ink, color-shifting ink and pearl ink can be applied.

Printing on a paper or a plastic card can also be aligned with the cell 4. As a result, a more complicated motif can be obtained. It is also possible to form a plurality of cells 4 into a cluster, and align the cluster of cells 4 with a motif of the printing.
This facilitates alignment of the display element and a motif of the printing.

As described above, in the display bodies 20 to 27 according to the present embodiment, by the above effect, the effects of transmission and reflection are switched in accordance with the orientation angle and the elevation angle of the observation because of the orientation angle and the inclination angle of the asymmetric prism structures 2 constituting the cell 4; as a result, a motif and a character can be expressed using its contrast. The structure is set so that the inclination angle θ of the inclined surface B of the asymmetric prism structures 2 varies for different cells 4 gradually as shown in FIGS. 12, 14, 17, 19, 22, and 24, whereby when the observer continuously shift the angle of the display bodies 20 to 27, the displayed position of the motif can also be gradually shifted accordingly. At this time, the shift in the position of the motif becomes continuous by decreasing the size of the cell 4 and the changing amount of the angle.

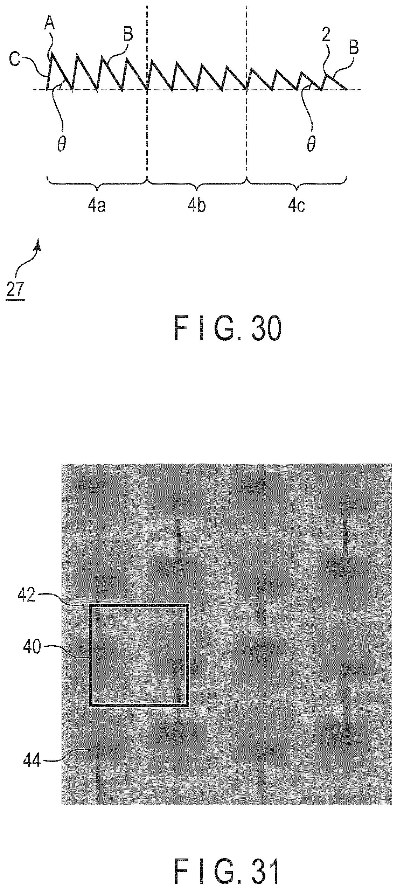

FIG. 31 is an image showing an example of a plane where the motif of the printing is aligned with the cluster 40 of cells 4. In addition to the cluster 40 of cells 4, a reflective area 42 and a transmissive area (print) 44 are displayed.

As illustrated in FIG. 31, the prism structures 2 are formed as a cluster 40 of cells 4, and the cluster 40 is arranged repeatedly. In the printing, blue and red are alternately printed on the base material at a cycle twice the size of the cluster 40 of cells 4. That is, the size of the blue print is the same as the size of the cluster 40 of cells 4, and the size of the red print is also the same as the size of the cluster 40 of the cell 4.

Furthermore, it is also possible to express discontinuous change in a motif by forming the asymmetric prism structures 2 into a cell structure and making it independent from the asymmetric prism structures 2 of an adjacent cell.

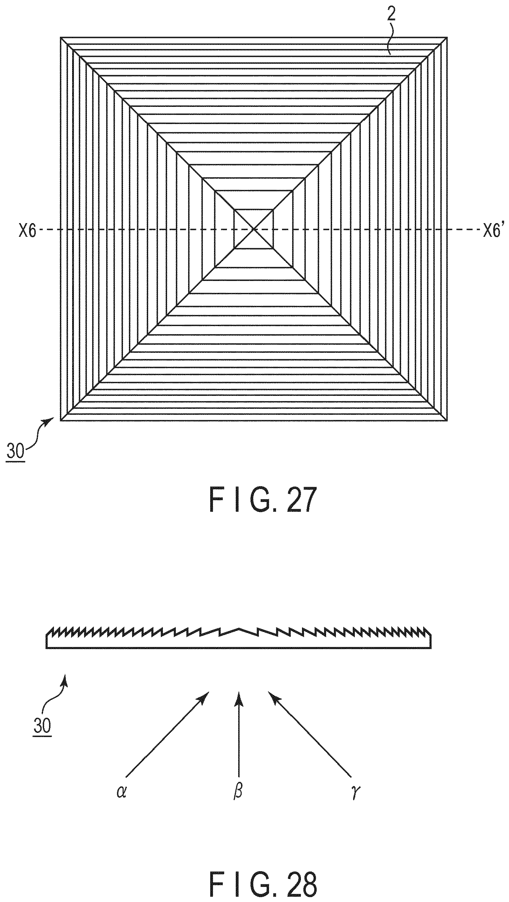

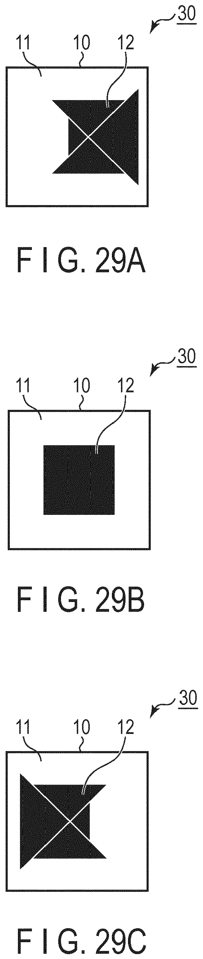

Next, the effect of expressing the display area 10 by the cell structure will be described using a comparative example. As the comparative example, FIG. 27 shows a plan view showing a configuration of a display element 30 that does not have a cell structure, unlike the present disclosure. If this display element 30 is observed from the front side, namely, the orientation β as shown in FIG. 28 that is a cross-sectional view taken along line X6-X6' in the plan view of FIG. 27, the motif shown in FIG. 29B is displayed in the display area 10. In this case, in FIG. 28, when the observing orientation is shifted from the front side to the left side and the motif is observed from the orientation α, the motif of FIG. 29B changes to the motif of FIG. 29A. In FIG. 28, when the observing orientation is shifted from the front side to the right side and the motif is observed from the orientation γ, the motif of FIG. 29B changes to the motif of FIG. 29C.

If the display area 10 is not expressed with a cell structure as in the comparative example, a visual effect where the motif moves with a three-dimensional effect in accordance with the observation direction is not obtained. On the other hand, it is possible to provide a three-dimensional visual effect to the motif by expressing the display area 10 with a cell structure and providing different transmission properties and reflection properties to different cells, as in the display bodies 20 to 27 according to the present embodiment.

Furthermore, as shown in FIG. 30 that is a cross-sectional view taken along the line X7-X7' in the plan view of FIG. 25, it is possible to suppress generation of diffracted light due to the periodicity of the structure by continuously changing the inclination angle θ of the asymmetric prism structures 2 in the cell 4 structure to break the periodicity. As a result, diffracted light can be prevented from being generated as noise.

As shown in FIG. 30, if the inclination angle θ of the inclined surface B continuously varies in the same cell 4, the average value of the inclination angles θ in the cell 4 can be applied as the inclination angle θ of the cell 4. This is because when a side of a cell 4 is equal to or less than 100µm, it is not possible to identify the change in the inclination angle θ in the cell 4 with the naked eye.

A character, a symbol, a number, and other patterns and the like may be applied as a motif. It is possible to display a motif as if the motif is positioned in front or in the back in accordance with the arrangement of the structure. It is also possible to provide a plurality of motifs in the display bodies 20 to 27, and provide a visual effect to the motifs so that the motifs appear to move in the opposite direction by shifting the viewpoint. In addition, it is possible to provide, in the display element, not only a motif which appears to move by shifting the viewpoint but also a motif which is stationary even if the viewpoint is shifted. This results in a more three-dimensional display.

If the display bodies 20 to 27 according to the present embodiment are provided on an opaque base material, the transmissive area appears as the color of the base material, and the reflective area looks white because of the reflected light. However, if a display element itself is colored, the reflected light is affected.

On the other hand, if the display bodies 20 to 27 according to the present embodiment are provided on a transparent base material, or if each of the display bodies 20 to 27 is independently observed, under the illumination condition where the display bodies 20 to 27 is dark on the side opposite to the observer and bright on the observer's side, the transmissive area is observed as black and the reflective area is observed as white because of its contrast.

If the display bodies 20 to 27 according to the present embodiment are provided on a screen of a display such as a liquid crystal display or an organic EL display or inside such a display, the displayed contents of the flat panel display in the transmissive area is easily recognized; on the other hand, the screen is dark in the reflective area, which makes it difficult to recognize the display of the flat panel display. With this effect, it is possible to move the area or generate disparity by shifting the viewpoint because of the structures of the display bodies 20 to 27, which enables three-dimensional display on a flat panel display that is not a 3D display.

By providing the display bodies 20 to 27 according to the present embodiment on the printed material, it is possible to provide a three-dimensional effect to the printed material or to enhance the motifability.

Various expressions can be obtained by providing an area having asymmetric prism structures 2, arranging this area so as to represent images such as a motif, a character, a number, etc., and arranging a plurality of areas preferably, in the display bodies 20 to 27 of the present disclosure. Further, the motif of each area appears to move when the viewpoint of the observer is shifted by changing either the orientation angle or the inclination angle of the asymmetric prism structures 2, or the orientation angle and the inclination angle.

The authenticity of the display bodies 20 to 27 can be determined by identifying the difference between the display bodies 20 to 27 according to the present embodiment and the forged product by illuminating the display bodies 20 to 27 from the observer's side to darken the back side, arranging a printed paper, a printed plastic sheet, or a colored plastic sheet, etc. which absorbs light on the backside, and observing the change in the displayed motif caused by the change in the transmissive area and the reflective area of the prism structures because of the difference in the orientation angle and the elevation angle of the observation.

In the above, the embodiment of the present disclosure is described with reference to the attached drawings; however, the present disclosure is not limited to this configuration. Modifications and corrections that would have been conceived by a person skilled in the art within the scope of the technical idea of the present disclosure can also be understood as belonging to the technical scope of the present disclosure.

## Claims

1. A display element comprising a plurality of display areas, **characterized in that**
the display area comprises a plurality of sub display areas each comprising a plurality of cells, and
the display area is adapted to display, in response to one or more of the sub display areas changing an optical property to become reflective or transmissive in accordance with an orientation angle and an elevation angle of observation, different motifs in accordance with one or both of the orientation angle and the elevation angle of observation.

2. The display element according to claim 1, **characterized in that**
a sub display area or two or more sub display areas of the plurality of sub display areas belong to a first sub display area group,
another sub display area or other two or more sub display areas of the plurality of sub display areas belong to a second sub display area group, and
the optical property of the cells in the sub display area belonging to the second sub display area group changes from transmissive to reflective if the optical property of the cells in the sub display area belonging to the first sub display area group changes from reflective to transmissive in accordance with change in one or both of the orientation angle and the elevation angle of observation.

3. The display element according to claim 1 or 2, **characterized in that** the motif is displayed in a manner that
a transmissive sub display area of the plurality of sub display areas is surrounded by a reflective sub display area, or
the reflective sub display area of the plurality of sub display areas is surrounded by the transmissive sub display area.

4. The display element according to claim 2, **characterized in that**
yet another sub display area or yet other two or more sub display areas of the plurality of sub display areas belong to a third sub display area group, and
the optical property of the cells in the sub display area belonging to the third sub display area group does not change if the optical property of the cells in the sub display area belonging to the first sub display area group and the optical property of the cells in the sub display area belonging to the second sub display area group change.

5. The display body according to any one of claims 1 to 4, **characterized in that** the optical property of each of the cells is changed in accordance with the orientation angle and the elevation angle of observation, by a structure in which
the cell comprises a plurality of prism structures arranged in parallel to each other and extending linearly or in an arc, the prism structures each having a cross-section of a triangular shape,
the triangular shape of each of the prism structures comprises sides sandwiching an apex and forming respective inclination angles different from each other, the side having a smaller inclination angle constituting a first inclined surface, wherein the first inclined surfaces of the prism structures have an identical inclination angle for each of the cells, and
the cells include more than one cells in which the prism structures in different cells are different in one or both of the inclination angle of the first inclined surfaces and a range of an orientation angle of the first inclined surfaces.

6. The display body according to any one of claims 1 to 4, **characterized in that** the optical property of each of the cells is changed in accordance with the orientation angle and the elevation angle of observation, by a structure in which
the cell comprises a plurality of prism structures arranged in parallel to each other and extending linearly or in an arc, the prism structures each having a cross-section of a triangular shape,
the triangular shape of each of the prism structures comprises sides sandwiching an apex and forming respective inclination angles different from each other, the side having a smaller inclination angle constituting a first inclined surface, wherein the inclination angle of the first inclined surfaces of the prism structures in the cell continuously varies, and
the cells include more than one cells in which the prism structures in different cells are different in one or both of a range of the inclination angle of the first inclined surfaces and a range of an orientation angle of the first inclined surfaces.

7. The display element according to any one of claims 1 to 6, **characterized in that** the plurality of display areas are arranged on an opaque base material.

8. The display element according to any one of claims 1 to 6, **characterized in that** the plurality of display areas are arranged on a transparent base material.

9. The display element according to any one of claims 1 to 6, **characterized in that** the display element is provided on a screen of a flat panel display or inside the flat panel display.

10. A printed material **characterized in** being formed by arranging the display element according to any one of claims 1 to 9.

11. A method for determining authenticity of the display element according to any one of claims 1 to 6 by checking change in a displayed motif while changing the orientation angle and the elevation angle of observation of the display element.

## Amended claims

### Amended claims under Art. 19.1 PCT

1. (Original) A display element comprising a plurality of display areas, **characterized in that**
the display area comprises a plurality of sub display areas each comprising a plurality of cells, and
the display area is adapted to display, in response to one or more of the sub display areas changing an optical property to become reflective or transmissive in accordance with an orientation angle and an elevation angle of observation, different motifs in accordance with one or both of the orientation angle and the elevation angle of observation.

2. (Original) The display element according to claim 1, **characterized in that**
a sub display area or two or more sub display areas of the plurality of sub display areas belong to a first sub display area group,
another sub display area or other two or more sub display areas of the plurality of sub display areas belong to a second sub display area group, and
the optical property of the cells in the sub display area belonging to the second sub display area group changes from transmissive to reflective if the optical property of the cells in the sub display area belonging to the first sub display area group changes from reflective to transmissive in accordance with change in one or both of the orientation angle and the elevation angle of observation.

3. (Original) The display element according to claim 1 or 2, **characterized in that** the motif is displayed in a manner that
a transmissive sub display area of the plurality of sub display areas is surrounded by a reflective sub display area, or
the reflective sub display area of the plurality of sub display areas is surrounded by the transmissive sub display area.

4. (Original) The display element according to claim 2, **characterized in that**
yet another sub display area or yet other two or more sub display areas of the plurality of sub display areas belong to a third sub display area group, and
the optical property of the cells in the sub display area belonging to the third sub display area group does not change if the optical property of the cells in the sub display area belonging to the first sub display area group and the optical property of the cells in the sub display area belonging to the second sub display area group change.

5. (Original) The display body according to any one of claims 1 to 4, **characterized in that** the optical property of each of the cells is changed in accordance with the orientation angle and the elevation angle of observation, by a structure in which
the cell comprises a plurality of prism structures arranged in parallel to each other and extending linearly or in an arc, the prism structures each having a cross-section of a triangular shape,
the triangular shape of each of the prism structures comprises sides sandwiching an apex and forming respective inclination angles different from each other, the side having a smaller inclination angle constituting a first inclined surface, wherein the first inclined surfaces of the prism structures have an identical inclination angle for each of the cells, and
the cells include more than one cells in which the prism structures in different cells are different in one or both of the inclination angle of the first inclined surfaces and a range of an orientation angle of the first inclined surfaces.

6. (Original) The display body according to any one of claims 1 to 4, **characterized in that** the optical property of each of the cells is changed in accordance with the orientation angle and the elevation angle of observation, by a structure in which
the cell comprises a plurality of prism structures arranged in parallel to each other and extending linearly or in an arc, the prism structures each having a cross-section of a triangular shape,
the triangular shape of each of the prism structures comprises sides sandwiching an apex and forming respective inclination angles different from each other, the side having a smaller inclination angle constituting a first inclined surface, wherein the inclination angle of the first inclined surfaces of the prism structures in the cell continuously varies, and
the cells include more than one cells in which the prism structures in different cells are different in one or both of a range of the inclination angle of the first inclined surfaces and a range of an orientation angle of the first inclined surfaces.

7. (Original) The display element according to any one of claims 1 to 6, **characterized in that** the plurality of display areas are arranged on an opaque base material.

8. (Original) The display element according to any one of claims 1 to 6, **characterized in that** the plurality of display areas are arranged on a transparent base material.

9. (Original) The display element according to any one of claims 1 to 6, **characterized in that** the display element is provided on a screen of a flat panel display or inside the flat panel display.

10. (Amended) A printed material **characterized in** being formed by arranging the display element according to any one of claims 1 to 9 and 12 to 14.

11. (Amended) A method for determining authenticity of the display element according to any one of claims 1 to 9 and 12 to 14 by checking change in a displayed motif while changing the orientation angle and the elevation angle of observation of the display element.

12. (New) The display element according to claim 1, **characterized in that** a boundary portion surrounding the cell is molded by flowing a resin for molding in a groove structure for forming the boundary portion in a molding plate.

13. (New) The display element according to claim 1, **characterized in that** the optical property is different for each of the cells.

14. (New) The display element according to claim 2, **characterized in that** a motif, which is changed differently in accordance with the orientation angle and the elevation angle of observation, is provided in at least two display areas of the plurality of display areas.

15. (New) A printed material according to claim 10, **characterized in that** a printed motif is aligned with the cell.

16. (New) A printed material according to claim 10, **characterized in that** a printed motif is aligned with a cluster of the cells.

Statement under Art. 19.1 PCT
Based on paragraph [0045], new claim 12 clarifies as follows: in a molding plate, flowability of a resin for molding is improved by flowing a resin for molding in a groove structure for forming a boundary portion surrounding the cell, and as a result, moldability is improved even in a complex shape where concavity and convexity are separated between cells as shown in FIGS. 4 A and 4B.

None of the cited documents 1 to 4 discloses or suggests that a display element is molded in the above manner, or the working effect thereof.

Based on paragraph [0017], new claim 13 clarifies that the optical property is different for each of the cells.

Based on paragraph [0018], new claim 14 clarifies that a motif, which is changed differently in accordance with the orientation angle and the elevation angle of observation, is provided in at least two display areas of the plurality of display areas.

Based on paragraph [0099], new claim 15 clarifies that a printed motif is aligned with the cell.

Based on paragraph [0099], new claim 16 clarifies that a printed motif is aligned with a cluster of the cells.
